# EUROPEAN PATENT APPLICATION

(11) **EP 4 811 470 A1**
(43) Date of publication of application: **23.09.2026**
(21) Application number: 26159821.3
(22) Date of filing: 20.02.2026
(51) Int. Cl.: H01M 8/026

(54) **SEPARATOR AND APPARATUS**

(30) Priority: 19.03.2025 JP 2025046099
(71) Applicant: KABUSHIKI KAISHA TOSHIBA, Kawasaki-shi, Kanagawa 212-0013 (JP)
(72) Inventor: HONGO, Takuya, Kawasaki-shi, Kanagawa (JP); ONO, Akihiko, Kawasaki-shi, Kanagawa (JP)
(74) Representative: Hoffmann Eitle

(57) **Abstract**

A separator according to an embodiment comprises a first supply groove, a first branching groove that includes multiple grooves; and a first exhaust groove. The first supply groove and the first exhaust groove extend in a first direction. The first branching groove is positioned between the first supply groove and the first exhaust groove in a second direction. The depth of the first supply groove is deeper than the depth of the first branching groove. The depth of the first exhaust groove is deeper than the depth of the first branching groove.

## Description

### FIELD

Embodiments described herein relate generally to a separator, an electrochemical cell, a stack and an apparatus.

### BACKGROUND

In recent years, expectations for renewable energy have been increasing. Examples of renewable energy include solar power generation, hydroelectric power generation, wind power generation, and geothermal power generation.

Furthermore, as efforts to decarbonize, power generation using fuel cells and energy conversion by electrolysis are attracting attention.

### BRIEF DESCRIPTION OF THE DRAWINGS

FIG. 1 is a schematic diagram of a separator according to an embodiment;
FIG. 2 is a cross-sectional diagram of a separator according to an embodiment;
FIG. 3 is a schematic cross-sectional diagram of a separator according to an embodiment;
FIG. 4 is a schematic cross-sectional diagram of a separator according to an embodiment;
FIG. 5 is a schematic cross-sectional diagram of a separator according to an embodiment;
FIG. 6 is a schematic cross-sectional diagram of a separator according to an embodiment;
FIG. 7 is a schematic cross-sectional diagram of a separator according to an embodiment;
FIG. 8 is a schematic cross-sectional diagram of a separator according to an embodiment;
FIG. 9 is a schematic cross-sectional diagram of a separator according to an embodiment;
FIG. 10 is a schematic cross-sectional diagram of a separator according to an embodiment;
FIG. 11 is a schematic cross-sectional diagram of a separator according to an embodiment;
FIG. 12 is a schematic cross-sectional diagram of a separator according to an embodiment;
FIG. 13 is a schematic cross-sectional diagram of a separator according to an embodiment;
FIG. 14 is a schematic cross-sectional diagram of a separator according to an embodiment;
FIG. 15 is a schematic cross-sectional diagram of a separator according to an embodiment;
FIG. 16 is a schematic cross-sectional diagram of a separator according to an embodiment;
FIG. 17 is a schematic cross-sectional diagram of a separator according to an embodiment;
FIG. 18 is a schematic cross-sectional diagram of a separator according to an embodiment;
FIG. 19 is a schematic cross-sectional diagram of a separator according to an embodiment;
FIG. 20 is a schematic cross-sectional diagram of a separator according to an embodiment;
FIG. 21 is a schematic cross-sectional diagram of a separator according to an embodiment;
FIG. 22 is a schematic cross-sectional diagram of a separator according to an embodiment;
FIG. 23 is a schematic cross-sectional diagram of a separator according to an embodiment;
FIG. 24 is a schematic diagram of a separator unit according to an embodiment;
FIG. 25 is a schematic diagram of an electrochemical cell according to an embodiment;
FIG. 26 is a schematic diagram of a stack according to an embodiment; and
FIG. 27 is a schematic diagram of an apparatus according to an embodiment.

### DETAILED DESCRIPTION

A separator according to an embodiment comprises a first supply groove, a first branching groove that includes multiple grooves; and a first exhaust groove. The first supply groove and the first exhaust groove extend in a first direction. The first branching groove is positioned between the first supply groove and the first exhaust groove in a second direction. The depth of the first supply groove is deeper than the depth of the first branching groove. The depth of the first exhaust groove is deeper than the depth of the first branching groove.

An electrochemical cell according to an embodiment comprises a first electrode which comprises a support; a second electrode including a support; a diaphragm between the first electrode and the second electrode; a first separator connected to the first electrode; and a second separator connected to the second electrode. The first separator or/and the second separator is the separator according to an embodiment. An apparatus according to an embodiment that is an electrolyzing apparatus or a fuel cell comprises the electrochemical cell according to an embodiment.

The following will describe in detail embodiments of the present invention with reference to the drawings. Note that in the following description, the same symbols are assigned to the same members, etc., and the explanation of the members, etc., that have already been explained may be omitted as appropriate.

The physical property values in the specification are values at a temperature of 25 [°C] and a pressure of 1 [atm]. The thickness of each member is the average value of the distance in the stacking direction.

### (First Embodiment)

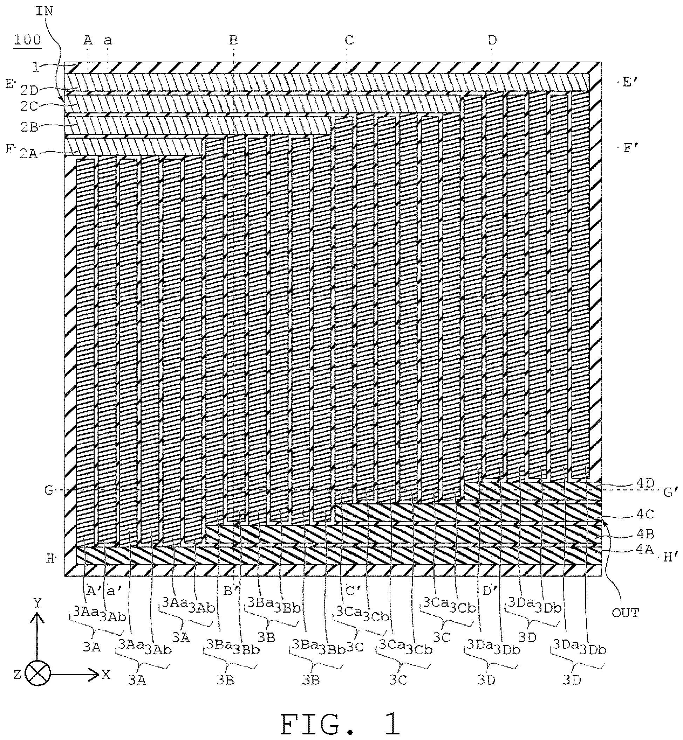

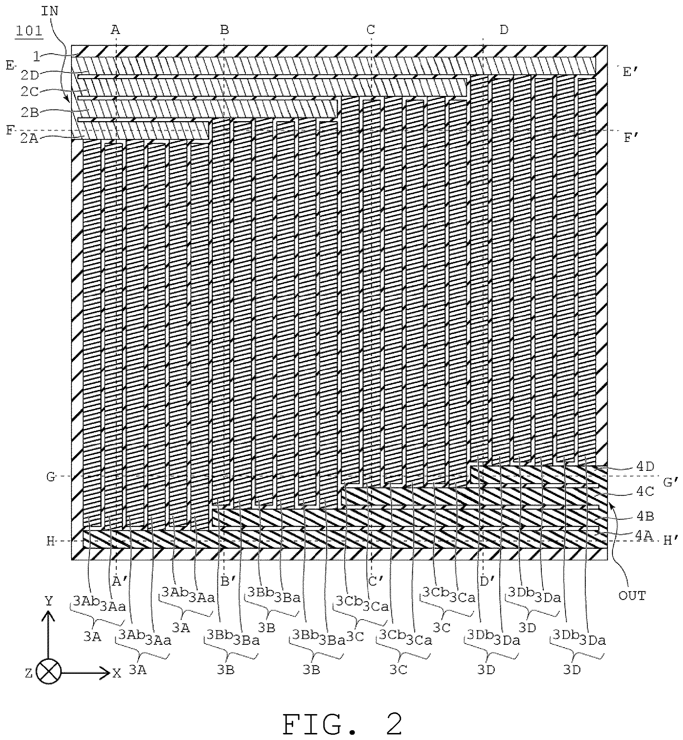

A first embodiment relates to a separator 100. The separator 100 is a rectifier plate used when supplying gas to a gas diffusion layer, etc. FIG. 1 shows a schematic diagram of the separator 100 according to this embodiment. FIG. 2 shows a schematic diagram of a separator 101.

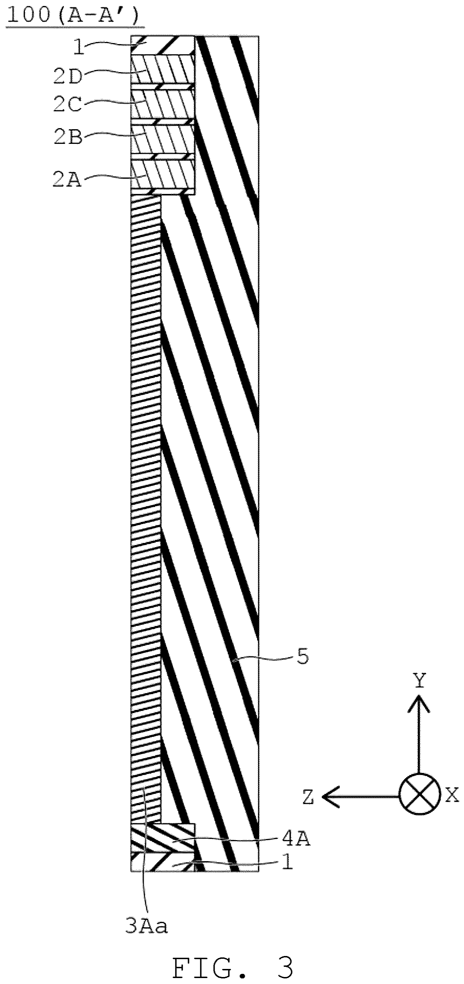

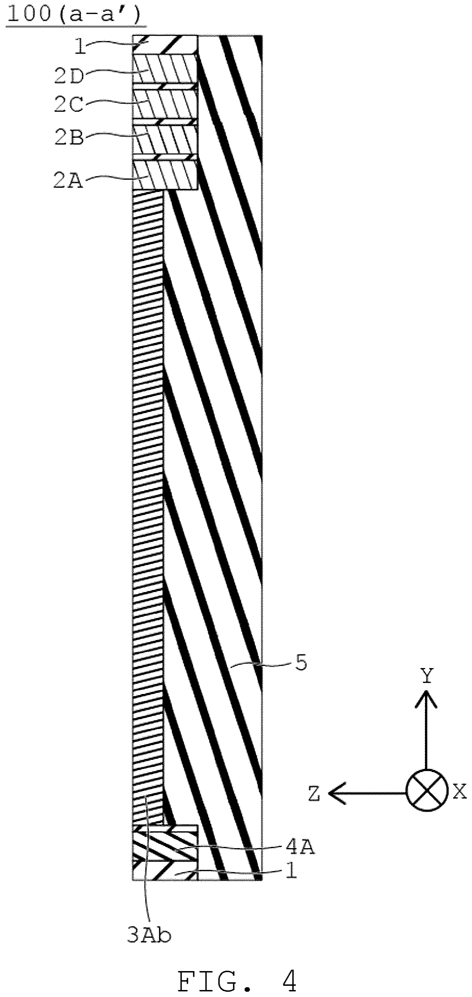

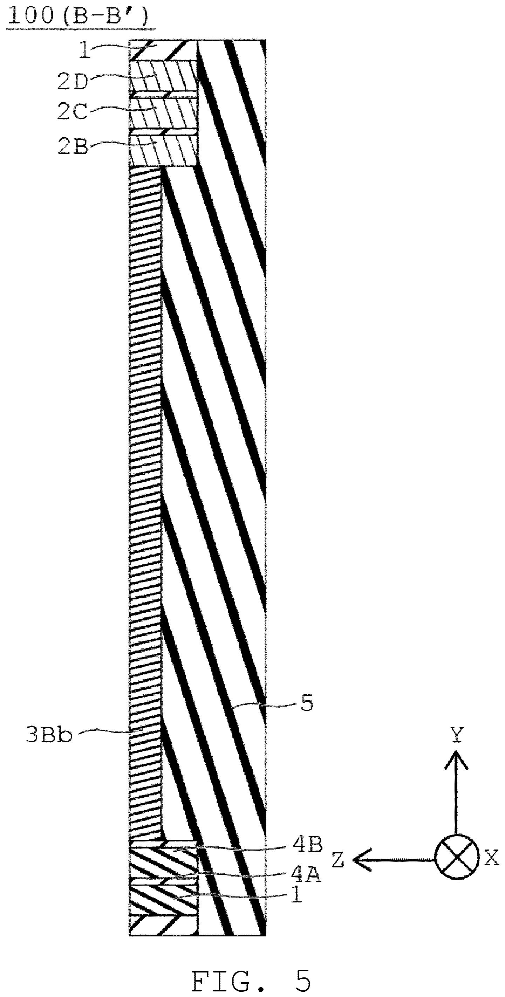

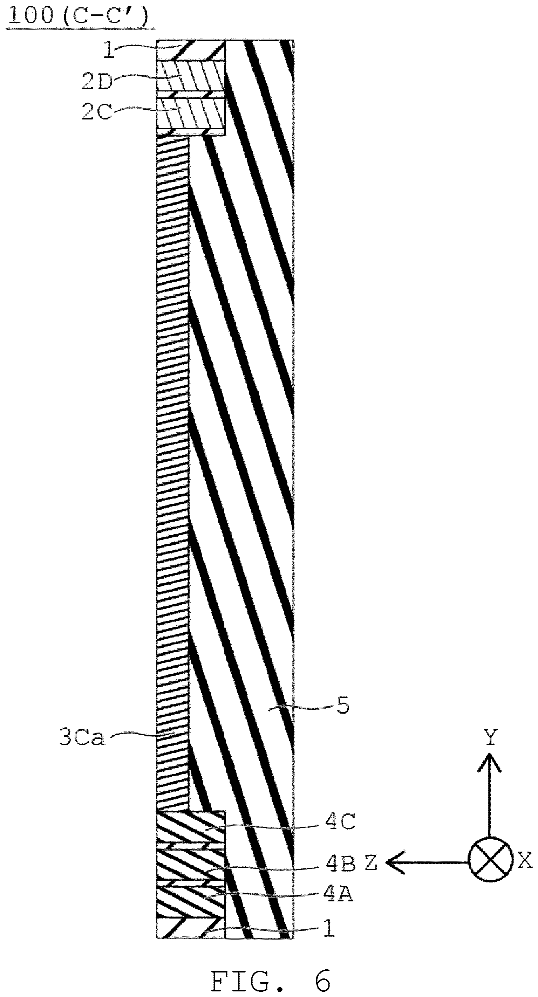

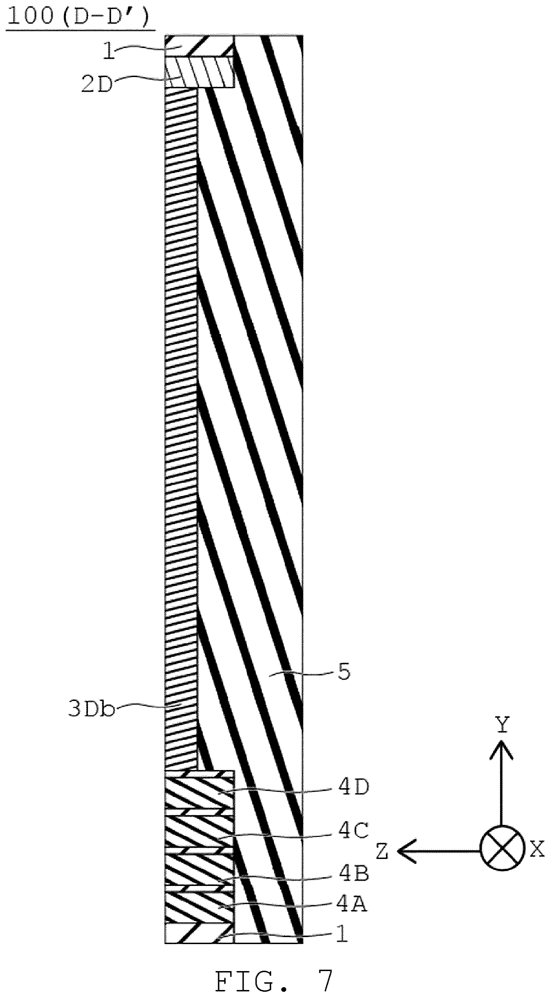

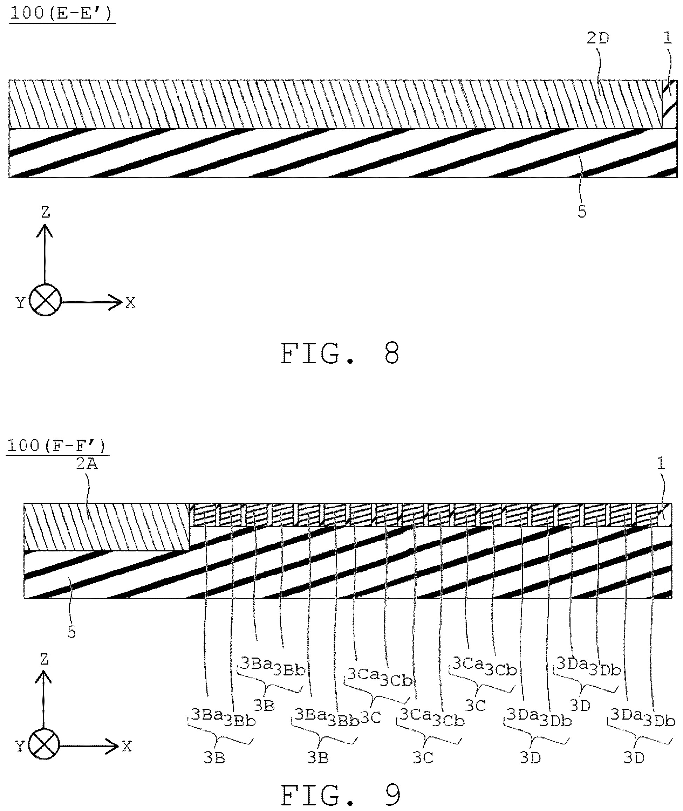

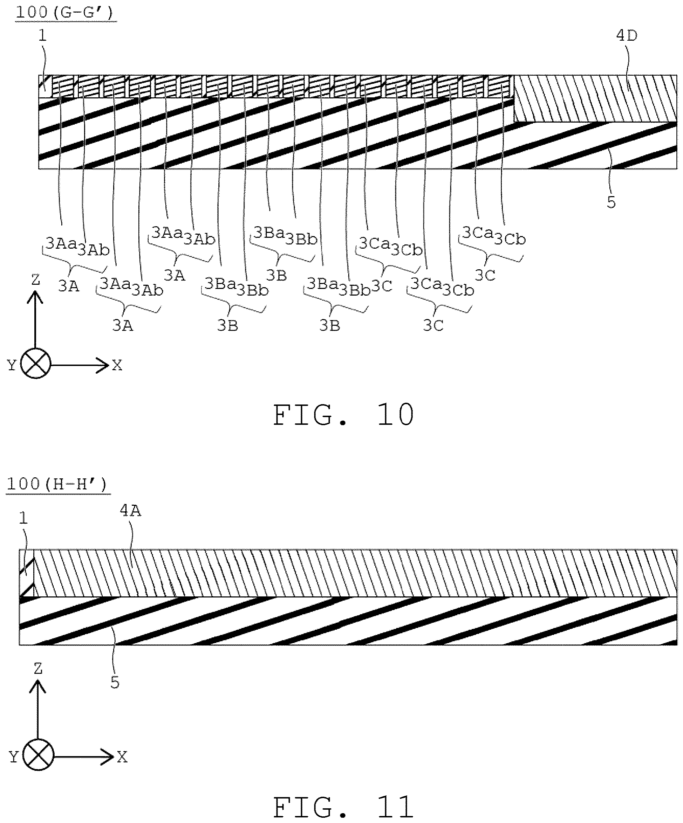

FIG. 3 shows a schematic cross-sectional diagram of A-A' of the separator 100 shown in FIG. 1. FIG. 4 shows a schematic cross-sectional diagram of a-a' of the separator 100 shown in FIG. 1. FIG. 5 shows a schematic cross-sectional diagram of B-B' of the separator 100 shown in FIG. 1. FIG. 6 shows a schematic cross-sectional diagram of C-C' of the separator 100 shown in FIG. 1. FIG. 7 shows a schematic cross-sectional diagram of D-D' of the separator 100 shown in FIG. 1. FIG. 8 shows a schematic cross-sectional diagram of E-E' of the separator 100 shown in FIG. 1. FIG. 9 shows a schematic cross-sectional diagram of F-F' of the separator 100 shown in FIG. 1. FIG. 10 shows a schematic cross-sectional diagram of G-G' of the separator 100 shown in FIG. 1. FIG. 11 shows a schematic cross-sectional diagram of H-H' of the separator 100 shown in FIG. 1.

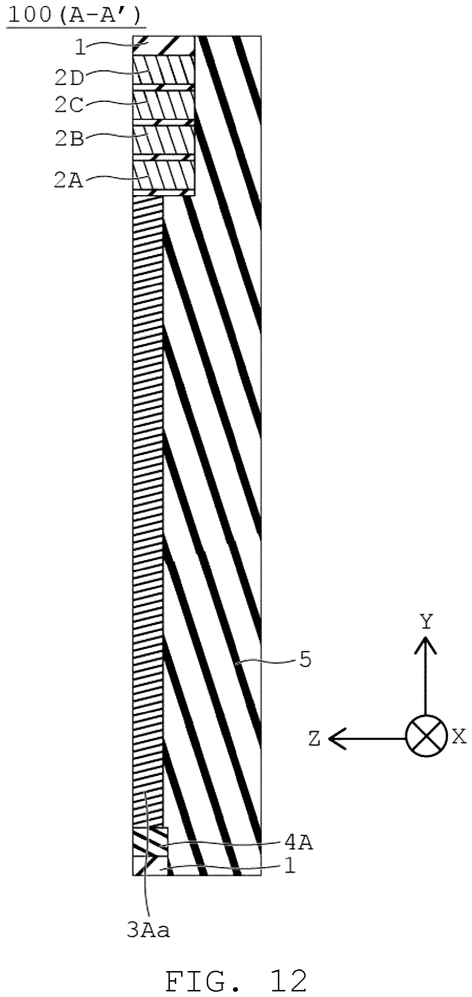

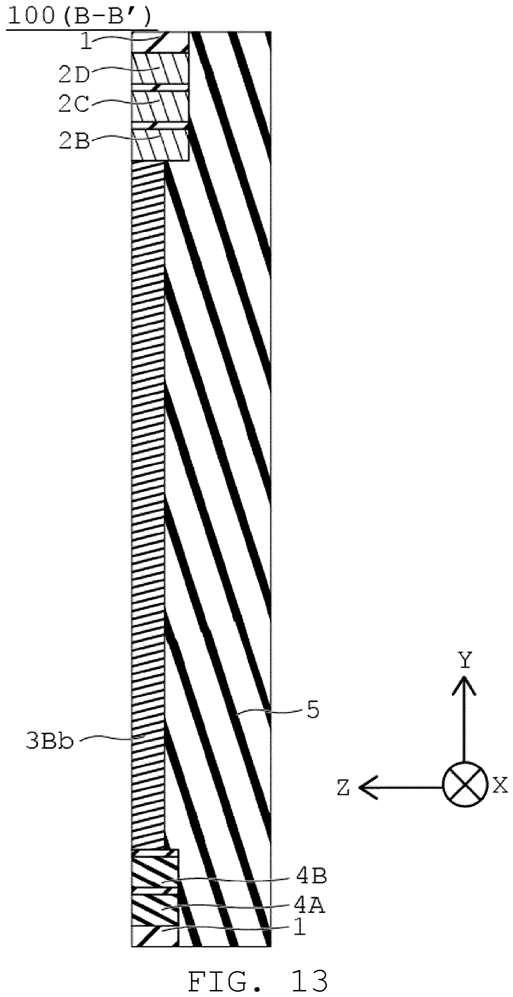

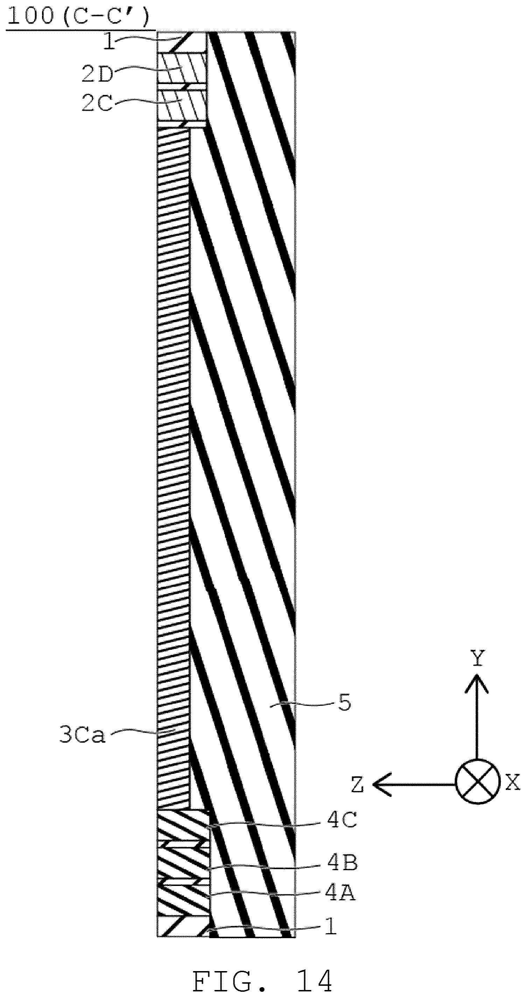

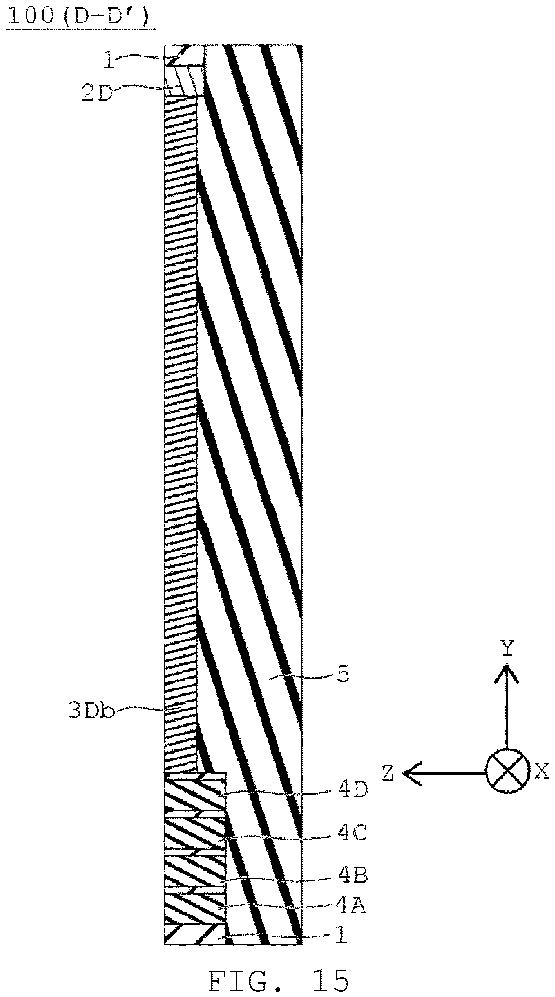

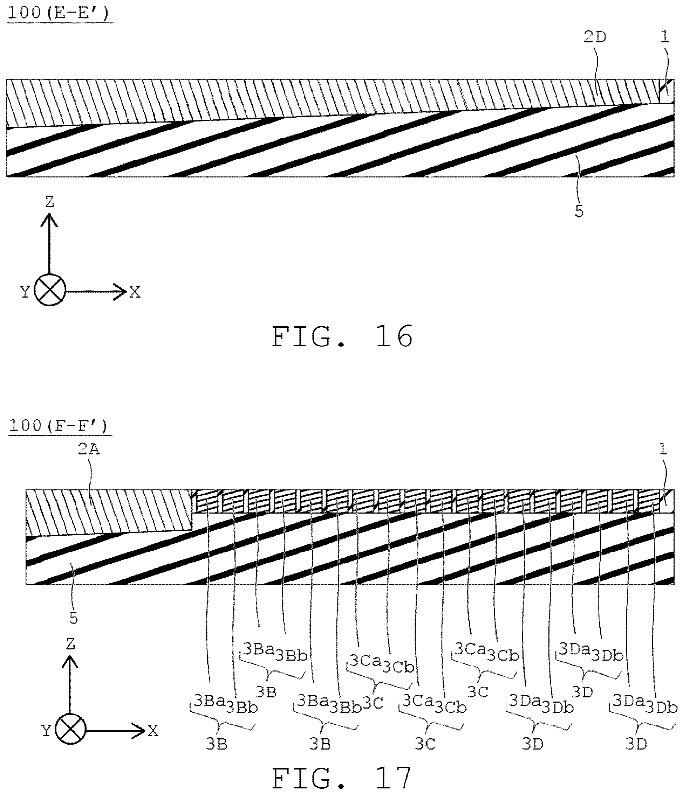

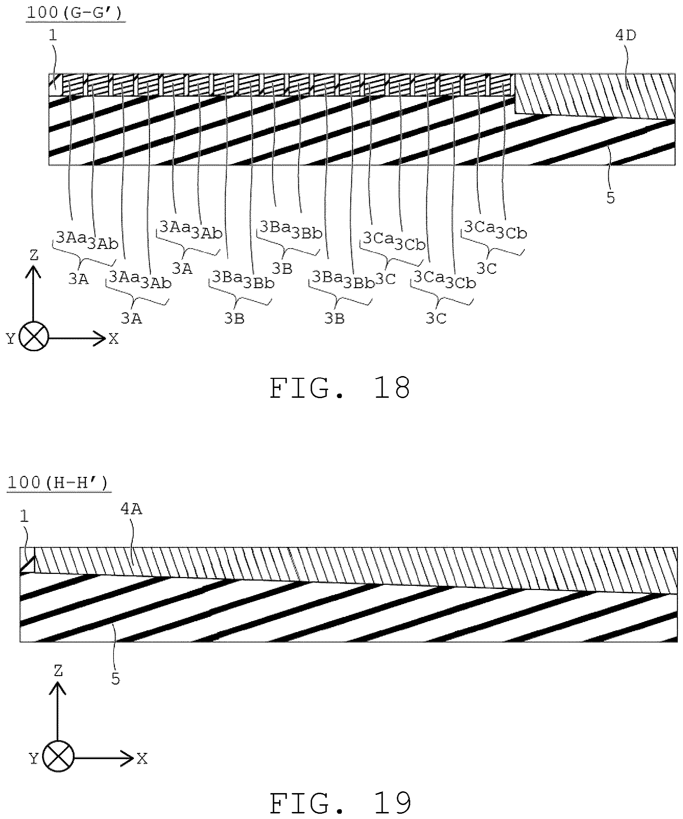

FIG. 12 shows a schematic cross-sectional diagram of A-A' of a variation example of the separator 100 shown in FIG. 1. FIG. 13 shows a schematic cross-sectional diagram of B-B' of a variation example of the separator 100 shown in FIG. 1. FIG. 14 shows a schematic cross-sectional diagram of C-C' of a variation example of the separator 100 shown in FIG. 1. FIG. 15 shows a schematic cross-sectional diagram of D-D' of a variation example of the separator 100 shown in FIG. 1. FIG. 16 shows a schematic cross-sectional diagram of E-E' of a variation example of the separator 100 shown in FIG. 1. FIG. 17 shows a schematic cross-sectional diagram of F-F' of a variation example of the separator 100 shown in FIG. 1. FIG. 18 shows a schematic cross-sectional diagram of G-G' of a variation example of the separator 100 shown in FIG. 1. FIG. 19 shows a schematic cross-sectional diagram of H-H' of a variation example of the separator 100 shown in FIG. 1.

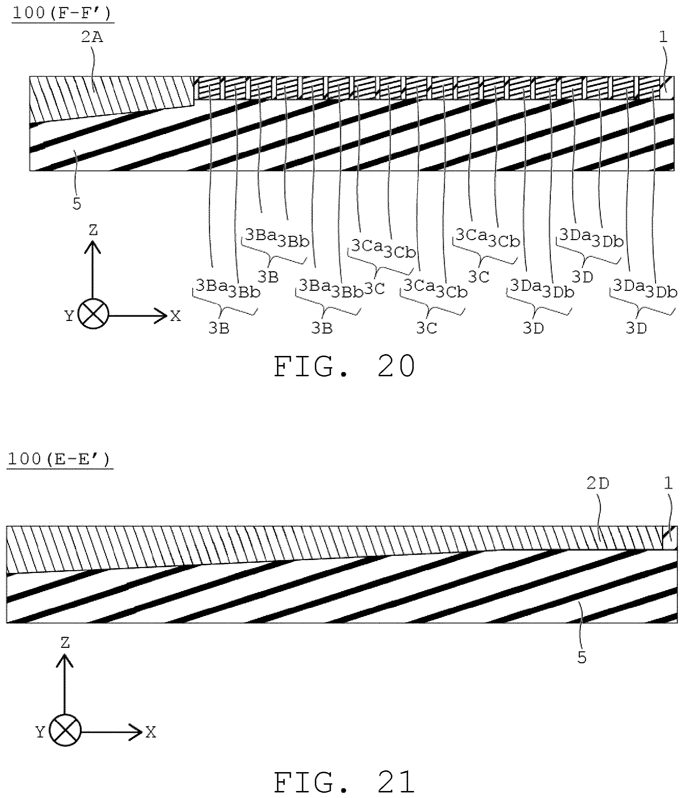

FIG. 20 shows a schematic cross-sectional diagram of F-F' of a variation example of the separator 100 shown in FIG. 1. FIG. 21 shows a schematic cross-sectional diagram of F-F' of a variation example of the separator 100 shown in FIG. 1.

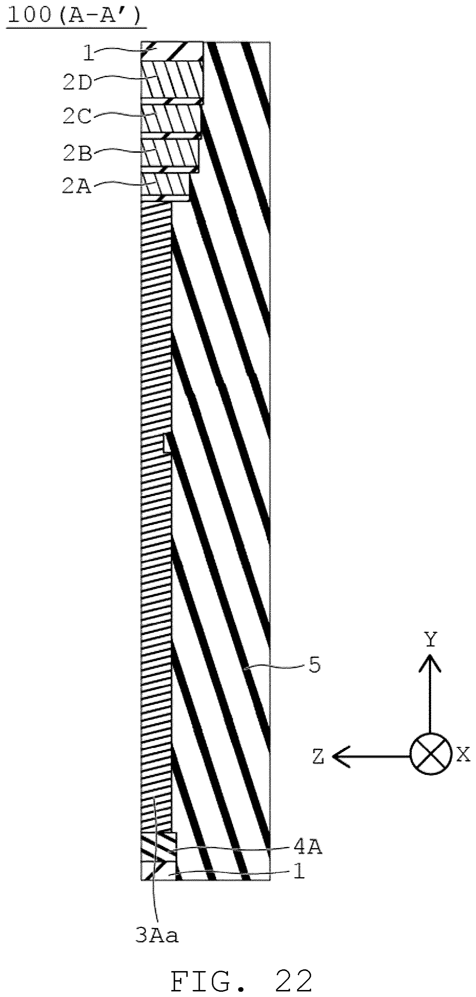

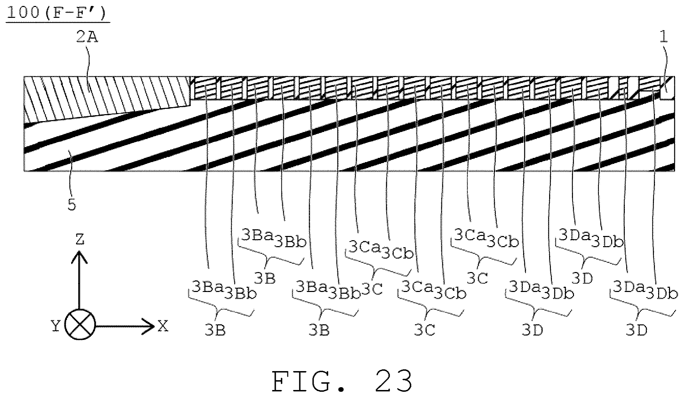

FIG. 22 shows a schematic cross-sectional diagram of A-A' of a variation example of the separator 100 shown in FIG. 1. FIG. 23 shows a schematic cross-sectional diagram of F-F' of a variation example of the separator 100 shown in FIG. 1.

The separator 100 has a flow-channel wall and a frame 5 that supports the flow-channel wall 1. The directions in the figure are represented by X, Y, and Z.

The flow-channel wall 1 is composed of metal, for example. The frame 5 is also composed of metal, for example.

The separator 100 according to the first embodiment can be used in electrochemical cells for fuel cells or electrolysis, for example. The separator 100 supplies fluids used in electrode reactions and discharges fluids containing products of electrode reactions. The fluids are gases and/or liquids.

The fluid enters from a supply port IN and is discharged from an exhaust port OUT. The separator 100 has a single supply port IN and a single exhaust port OUT.

The flow-channel wall 1 on the side opposite the frame 5 of the separator 100 is in direct contact with, for example, a gas diffusion layer. The grooves of the separator 100 are connected to the gas diffusion layer, for example. Overall, the grooves of the separator 100 are connected to the gas diffusion layer. That is, the gaps that are the grooves overall become fluid passages to the gas diffusion layer.

The separator 100 is an Interdigitated Flow Channel type separator. An Interdigitated Flow Channel type separator has a structure in which supply grooves connected to flow channels and branching grooves connected to exhaust grooves alternate with each other. The exhaust groove can be used as the supply groove, and the supply groove can be used as the exhaust groove.

The space surrounded by the flow-channel wall 1 and the frame 5 is a groove. Grooves are formed by the flow-channel wall 1. The outermost side of the flow-channel wall 1 forms an outer frame. There are grooves between the flow-channel wall 1. Fluid flows through the grooves.

The separator 100 includes supply grooves (2A, 2B, 2C, 2D), branching grooves (3A, 3B, 3C, 3D) and exhaust grooves (4A, 4B, 4C, 4D). The fluid flowing through the separator 100 flows from the supply grooves to the branching grooves, and then from the branching grooves to the exhaust grooves and is discharged outside the separator 100. While the separator shown in FIG. 1 has four of each supply groove, branching groove, and exhaust groove, two or more are sufficient and the upper limit is not particularly limited. Moreover, it is preferable that the separator include two or more and fifteen or less the supply grooves, the branching grooves, and the exhaust grooves. The number of supply grooves, branching grooves, and exhaust grooves can be selected to suitable values according to the width of the flow-channel groove and the shape of the separator 100.

The following explanation of the supply groove, unless otherwise specified, applies to the entire supply groove. For example, the explanation that is not specific to a first supply groove 2A, a second supply groove 2B, a third supply groove 2C, and a fourth supply groove 2D is an explanation that is not specific to a particular supply groove. The same applies to the branching groove and exhaust groove.

The separator 100 includes supply grooves comprising a first supply groove 2A, a second supply groove 2B, a third supply groove 2C, and a fourth supply groove 2D. The first supply groove 2A, the second supply groove 2B, the third supply groove 2C, and the fourth supply groove 2D extend in the first direction (X-direction). It is preferable that the first supply groove 2A, the second supply groove 2B, the third supply groove 2C, and the fourth supply groove 2D extend in the same or substantially the same direction. The first direction runs along a surface of the frame 5. The supply grooves, branching grooves, and exhaust grooves are open on the side opposite to the frame 5 side and are connected to a gas diffusion layer, etc.

From the outside to the inside (in the second direction), they are arranged in the order of the first supply groove 2A, the second supply groove 2B, the third supply groove 2C, and the fourth supply groove 2D. The first supply groove 2A is the shortest groove. The second supply groove 2B is the second shortest groove after the first supply groove 2A. The fourth supply groove 2D is the longest groove. The third supply groove 2C is the second-longest groove after the fourth supply groove 2D and longer than the second supply groove 2B.

It is preferable that the first supply groove 2A be adjacent to the second supply groove 2B, preferably directly adjacent. The second supply groove 2B is positioned between the first supply groove 2A and the third supply groove 2C, preferably adjacent to the first supply groove 2A and the third supply groove 2C, preferably directly adjacent. The third supply groove 2C is positioned between the second supply groove 2B and the fourth supply groove 2D, preferably adjacent to the second supply groove 2B and the fourth supply groove 2D, preferably directly adjacent.

The separator 100 includes branching grooves comprising a first branching groove 3A, a second branching groove 3B, a third branching groove 3C, and a fourth branching groove 3D. The first branching groove 3A, the second branching groove 3B, the third branching groove 3C, and the fourth branching groove 3D extend in the second direction (Y-direction). It is preferable that the first branching groove 3A, the second branching groove 3B, the third branching groove 3C, and the fourth branching groove 3D extend in the same or substantially the same direction. The first branching groove 3A, the second branching groove 3B, the third branching groove 3C, and the fourth branching groove 3D are arranged along the longitudinal direction of the supply grooves and exhaust grooves. The first and second directions run along a surface of the frame 5. The second direction is perpendicular to or substantially perpendicular to the first direction.

The branching grooves are arranged in the second direction (Y-direction) between the supply grooves and the exhaust grooves, connecting the supply grooves and exhaust grooves. The supply grooves, branching grooves, and exhaust grooves are aligned in the second direction.

The lengths of the first branching groove 3A, the second branching groove 3B, the third branching groove 3C, and the fourth branching groove 3D are the same or substantially the same.

It is preferable that the first branching groove 3A be adjacent to the second branching groove 3B, preferably directly adjacent. The second branching groove 3B is positioned between the first branching groove 3A and the third branching groove 3C, preferably adjacent to the first branching groove 3A and the third branching groove 3C, preferably directly adjacent. The third branching groove 3C is positioned between the second branching groove 3B and the fourth branching groove 3D, preferably adjacent to the second branching groove 3B and the fourth branching groove 3D, preferably directly adjacent.

The separator 100 includes exhaust grooves comprising a first exhaust groove 4A, a second exhaust groove 4B, a third exhaust groove 4C, and a fourth exhaust groove 4D. The first exhaust groove 4A, the second exhaust groove 4B, the third exhaust groove 4C, and the fourth exhaust groove 4D extend in the first direction (X-direction). It is preferable that the first exhaust groove 4A, the second exhaust groove 4B, the third exhaust groove 4C, and the fourth exhaust groove 4D extend in the same or substantially the same direction. It is preferable that the directions in which the first exhaust groove 4A, the second exhaust groove 4B, the third exhaust groove 4C, and the fourth exhaust groove 4D extend are the same or substantially the same as the directions in which the first supply groove 2A, the second supply groove 2B, the third supply groove 2C, and the fourth supply groove 2D extend.

The length of the first exhaust groove 4A is twice or more the length of the first supply groove 2A. The length of the first exhaust groove 4A is longer than the lengths of the second supply groove 2B and the second exhaust groove 4B. It is preferable that the length of the first exhaust groove 4A be 1.5 times or more the length of the second supply groove 2B, and more preferably twice or more the length of the second supply groove 2B. The length of the first exhaust groove 4A is longer than the lengths of the third supply groove 2C and the third exhaust groove 4C.

The length of the fourth supply groove 2D is twice or more the length of the fourth exhaust groove 4D. The length of the fourth supply groove 2D is longer than the lengths of the second supply groove 2B and the second exhaust groove 4B. It is preferable that the length of the fourth supply groove 2D be 1.5 times or more the length of the second supply groove 2B, and more preferably twice or more the length of the second supply groove 2B. The length of the fourth supply groove 2D is longer than the lengths of the third supply groove 2C and the third exhaust groove 4C.

From the outside to the inside (in the second direction), they are arranged in the order of the fourth exhaust groove 4D, the third exhaust groove 4C, the second exhaust groove 4B, and the first exhaust groove 4A. The first supply groove 2A is the longest groove. The second supply groove 2B is the second longest groove after the first supply groove 2A. The fourth exhaust groove 4D is the shortest groove. The third exhaust groove 4C is the second-shortest groove after the fourth exhaust groove 4D and shorter than the second exhaust groove 4B.

It is preferable that the first exhaust groove 4A be adjacent to the second exhaust groove 4B, preferably directly adjacent. The second exhaust groove 4B is positioned between the first exhaust groove 4A and the third exhaust groove 4C, preferably adjacent to the first exhaust groove 4A and the third exhaust groove 4C, preferably directly adjacent. The third exhaust groove 4C is positioned between the second exhaust groove 4B and the fourth exhaust groove 4D, preferably adjacent to the second exhaust groove 4B and the fourth exhaust groove 4D, preferably directly adjacent.

One end of the first branching groove 3A is connected to the first supply groove 2A, and the other end is connected to the first exhaust groove 4A. One end is the end on the first supply groove 2A side. The other end is the end on the first exhaust groove 4A side. The first branching groove 3A is arranged between the first supply groove 2A and the first exhaust groove 4A in the second direction.

The first branching groove 3A has a first exhaust-side opening groove 3Aa that is closed on the first supply groove 2A side and is open on the first exhaust groove 4A side; and a first supply-side opening groove 3Ab that is open on the first supply groove 2A side and is closed on the first exhaust groove 4A side. A pair of the first exhaust-side opening groove 3Aa and the first supply-side opening groove 3Ab arranged alternately constitutes one first branching groove 3A. FIG. 1 shows a diagram with three pairs of the first branching grooves 3A. The first branching groove 3A has multiple pairs of the first exhaust-side opening groove 3Aa and the first supply-side opening groove 3Ab; preferably two or more pairs to four or less pairs; and more preferably two or more pairs to three or less pairs.

The opening portion of the first exhaust-side opening groove 3Aa is connected to the first exhaust groove 4A. Multiple first exhaust-side branching grooves 3Aa are connected to one first exhaust groove 4A. The first exhaust-side opening groove 3Aa and the first exhaust groove 4A are connected so that their flow channels are continuous.

The flow-channel wall 1 is provided at the first supply groove 2A side end of the first exhaust-side opening groove 3Aa, and the flow-channel wall 1 at the first supply groove 2A side end of the first exhaust-side opening groove 3Aa is connected to the first supply groove 2A. Unless an opening is provided in the flow-channel wall 1 at the first supply groove 2A side end, the first exhaust-side opening groove 3Aa and the first supply groove 2A are not connected as a flow channel.

The opening portion of the first supply-side opening groove 3Ab is connected to the first supply groove 2A. Multiple first supply-side branching grooves 3Ab are connected to one first supply groove 2A. The first supply-side opening groove 3Ab and the first supply groove 2A are connected so that their flow channels are continuous.

The flow-channel wall 1 is provided at the first exhaust groove 4A side end of the first supply-side opening groove 3Ab, and the flow-channel wall 1 at the first exhaust groove 4A side end of the first supply-side opening groove 3Ab are connected to the first exhaust groove 4A. Unless an opening is provided in the flow-channel wall 1 at the first exhaust groove 4A side end, the first supply-side opening groove 3Ab and the first exhaust groove 4A are not connected as a flow channel.

One end of the second branching groove 3B is connected to the second supply groove 2B, and the other end is connected to the second exhaust groove 4B. One end is the end on the second supply groove 2B side. The other end is the end on the second exhaust groove 4B side. The second branching groove 3B is arranged between the second supply groove 2B and the second exhaust groove 4B in the second direction.

The second branching groove 3B has a second exhaust-side opening groove 3Ba that is closed on the second supply groove 2B side and is open on the second exhaust groove 4B side; and a second supply-side opening groove 3Bb that is open on the second supply groove 2B side and is closed on the second exhaust groove 4B side. A pair of the second exhaust-side opening groove 3Ba and the second supply-side opening groove 3Bb arranged alternately constitutes one second branching groove 3B. FIG. 1 shows a diagram with three pairs of the second branching grooves 3B. The second branching groove 3B has multiple pairs of the second exhaust-side opening groove 3Ba and the second supply-side opening groove 3Bb; preferably two or more pairs to four or less pairs; and more preferably two or more pairs to three or less pairs.

The opening portion of the second exhaust-side opening groove 3Ba is connected to the second exhaust groove 4B. Multiple second exhaust-side branching grooves 3Ba are connected to one second exhaust groove 4B. The second exhaust-side opening groove 3Ba and the second exhaust groove 4B are connected so that their flow channels are continuous.

The flow-channel wall 1 is provided at the second supply groove 2B side end of the second exhaust-side opening groove 3Ba, and the flow-channel wall 1 at the second supply groove 2B side end of the second exhaust-side opening groove 3Ba are connected to the second supply groove 2B. Unless an opening is provided in the flow-channel wall 1 at the second supply groove 2B side end, the second exhaust-side opening groove 3Ba and the second supply groove 2B are not connected as a flow channel.

The opening portion of the second supply-side opening groove 3Bb is connected to the second supply groove 2B. Multiple second supply-side branching grooves 3Bb are connected to one second supply groove 2B. The second supply-side opening groove 3Bb and the second supply groove 2B are connected so that their flow channels are continuous.

The flow-channel wall 1 is provided at the second exhaust groove 4B side end of the second supply-side opening groove 3Bb, and the flow-channel wall 1 at the second exhaust groove 4B side end of the second supply-side opening groove 3Bb are connected to the second exhaust groove 4B. Unless an opening is provided in the flow-channel wall 1 at the second exhaust groove 4B side end, the second supply-side opening groove 3Bb and the second exhaust groove 4B are not connected as a flow channel.

One end of the third branching groove 3C is connected to the third supply groove 2C, and the other end is connected to the third exhaust groove 4C. One end is the end on the third supply groove 2C side. The other end is the end on the third exhaust groove 4C side. The third branching groove 3C is arranged between the third supply groove 2C and the third exhaust groove 4C in the second direction.

The third branching groove 3C has a third exhaust-side opening groove 3Ca that is closed on the third supply groove 2C side and is open on the third exhaust groove 4C side; and a third supply-side opening groove 3Cb that is open on the third supply groove 2C side and is closed on the third exhaust groove 4C side. A pair of the third exhaust-side opening groove 3Ca and the third supply-side opening groove 3Cb arranged alternately constitutes one third branching groove 3C. FIG. 1 shows a diagram with three pairs of the third branching grooves 3C. The third branching groove 3C has multiple pairs of the third exhaust-side opening groove 3Ca and the third supply-side opening groove 3Cb; preferably two or more pairs to four or less pairs; and more preferably two or more pairs to three or less pairs.

The opening portion of the third exhaust-side opening groove 3Ca is connected to the third exhaust groove 4C. Multiple third exhaust-side branching grooves 3Ca are connected to one third exhaust groove 4C. The third exhaust-side opening groove 3Ca and the third exhaust groove 4C are connected so that their flow channels are continuous.

The flow-channel wall 1 is provided at the third supply groove 2C side end of the third exhaust-side opening groove 3Ca, and the flow-channel wall 1 at the third supply groove 2C side end of the third exhaust-side opening groove 3Ca is connected to the third supply groove 2C. Unless an opening is provided in the flow-channel wall 1 at the third supply groove 2C side end, the third exhaust-side opening groove 3Ca and the third supply groove 2C are not connected as a flow channel.

The opening portion of the third supply-side opening groove 3Cb is connected to the third supply groove 2C. Multiple third supply-side branching grooves 3Cb are connected to one third supply groove 2C. The third supply-side opening groove 3Cb and the third supply groove 2C are connected so that their flow channels are continuous.

The flow-channel wall 1 is provided at the third exhaust groove 4C side end of the third supply-side opening groove 3Cb, and the flow-channel wall 1 at the third exhaust groove 4C side end of the third supply-side opening groove 3Cb are connected to the third exhaust groove 4C. Unless an opening is provided in the flow-channel wall 1 at the third exhaust groove 4C side end, the third supply-side opening groove 3Cb and the third exhaust groove 4C are not connected as a flow channel.

One end of the fourth branching groove 3D is connected to the fourth supply groove 2D, and the other end is connected to the fourth exhaust groove 4D. One end is the end on the fourth supply groove 2D side. The other end is the end on the fourth exhaust groove 4D side. The fourth branching groove 3D is arranged between the fourth supply groove 2D and the fourth exhaust groove 4D in the second direction.

The fourth branching groove 3D has a fourth exhaust-side opening groove 3Da that is closed on the fourth supply groove 2D side and is open on the fourth exhaust groove 4D side; and a fourth supply-side opening groove 3Db that is open on the fourth supply groove 2D side and is closed on the fourth exhaust groove 4D side. A pair of the fourth exhaust-side opening groove 3Da and the fourth supply-side opening groove 3Db arranged alternately constitutes one fourth branching groove 3D. FIG. 1 shows a diagram with three pairs of the fourth branching grooves 3D. The fourth branching groove 3D has multiple pairs of the fourth exhaust-side opening groove 3Da and the fourth supply-side opening groove 3Db; preferably two or more pairs to four or less pairs; and more preferably two or more pairs to three or less pairs.

The opening portion of the fourth exhaust-side opening groove 3Da is connected to the fourth exhaust groove 4D. Multiple fourth exhaust-side branching grooves 3Da are connected to one fourth exhaust groove 4D. The fourth exhaust-side opening groove 3Da and the fourth exhaust groove 4D are connected so that their flow channels are continuous.

The flow-channel wall 1 is provided at the fourth supply groove 2D side end of the fourth exhaust-side opening groove 3Da, and the flow-channel wall 1 at the fourth supply groove 2D side end of the fourth exhaust-side opening groove 3Da are connected to the fourth supply groove 2D. Unless an opening is provided in the flow-channel wall 1 at the fourth supply groove 2D side end, the fourth exhaust-side opening groove 3Da and the fourth supply groove 2D are not connected as a flow channel.

The opening portion of the fourth supply-side opening groove 3Db is connected to the fourth supply groove 2D. Multiple fourth supply-side branching grooves 3Db are connected to one fourth supply groove 2D. The fourth supply-side opening groove 3Db and the fourth supply groove 2D are connected so that their flow channels are continuous.

The flow-channel wall 1 is provided at the fourth exhaust groove 4D side end of the fourth supply-side opening groove 3Db, and the flow-channel wall 1 at the fourth exhaust groove 4D side end of the fourth supply-side opening groove 3Db is connected to the fourth exhaust groove 4D. Unless an opening is provided in the flow-channel wall 1 at the fourth exhaust groove 4D side end, the fourth supply-side opening groove 3Db and the fourth exhaust groove 4D are not connected as a flow channel.

In the second direction, the fourth supply groove 2D and the first exhaust groove 4A sandwich the third supply groove 2C, the second supply groove 2, the first supply groove 2A, and the first branching groove 3A in this order. In the second direction, the fourth supply groove 2D and the first exhaust groove 4A sandwich the third supply groove 2C, the second supply groove 2, the second branching groove 3B, and the second exhaust groove 4B in this order. In the second direction, the fourth supply groove 2D and the first exhaust groove 4A sandwich the third supply groove 2C, the third branching groove 3C, the third exhaust groove 4C, and the second exhaust groove 4B in this order. In the second direction, the fourth supply groove 2D and the first exhaust groove 4A sandwich the fourth branching groove 3D, the fourth exhaust groove 4D, the third exhaust groove 4C, and the second exhaust groove 4B in this order.

It is preferable that the volume of the branching groove (volume of the space inside the groove) be 32% or more and 76% or less of the sum total of the supply groove volume, the branching groove volume, and the exhaust groove volume; more preferably 33% or more and 57% or less; and even more preferably 34% or more and 38% or less.

The opening area of the branching groove is preferably 12% or more and 36% or less of the sum total of the supply groove opening area, the branching groove opening area, and the exhaust groove opening area, more preferably 13% or more and 27% or less, and further preferably 14% or more and 18% or less.

The difference between the separator 100 in FIG. 1 and the separator 101 in FIG. 2 will be explained. In the separator 100, the first exhaust-side opening groove 3Aa and the first supply-side opening groove 3Ab is arranged in this order from the left side of the drawing. On the other hand, in separator 101, the first supply-side opening groove 3Ab and the first exhaust-side opening groove 3Aa are arranged in reverse order to the separator 100. The flow-channel wall 1 branching the supply grooves in the separator 100 is connected to the supply port IN, while the flow-channel wall 1 branching the supply grooves in the separator 101 is not connected to the supply port IN. The flow-channel wall 1 branching the exhaust grooves in the separator 100 is connected to the exhaust port OUT, while the flow-channel wall 1 branching the exhaust grooves in separator 101 is not connected to the exhaust port OUT. The description of the embodiment is common to both separators 100 and 101.

The flow channels for fluid from the first supply groove 2A to the first exhaust groove 4A will be explained. Fluid entering the separator 100 from the opening part of the first supply groove 2A flows through the first supply groove 2A and flows into a plurality of the first branching grooves 3A. The fluid directly flows into the first supply-side opening groove 3Ab, and for example, it flows through a gas diffusion layer in contact with the separator 100 by crossing over the flow-channel wall 1 to reach the first exhaust-side opening groove 3Aa. Fluid flowing through the first supply-side opening groove 3Ab flows into the first exhaust groove 4A by crossing over the flow-channel wall 1, and fluid flowing through the first exhaust-side opening groove 3Aa can directly flow into the first exhaust groove 4A. The fluid flowing through the first exhaust groove 4A is discharged from the first exhaust groove 4A. Some of the fluid flows through adjacent grooves by crossing over the flow-channel wall 1.

Fluid is divided and flows from one supply groove to a plurality of branching grooves. Since the branching grooves occupy most of the separator's flow channel and it is desirable for the fluid to flow smoothly overall, a large amount of fluid needs to be flowed into the branching grooves. Since the supply groove and the exhaust groove are also flow channels with openings on the side opposite to the frame 5 side, when the flow rate to the supply groove and the exhaust groove increases relatively, or the flow velocity increases relatively, a lot of fluid will overflow from the supply groove as if it were escaping from the separator. As a result, it becomes difficult for the branching grooves connected to the supply grooves with longer lengths among multiple supply grooves to be supplied with fluid.

When there are multiple supply grooves and the supply grooves do not have openings on the side opposite to the frame 5 side as a whole, it is less likely that a lot of fluid will overflow from the supply grooves and escape from the separator. However, if there are multiple supply grooves and the supply grooves and/or exhaust grooves have openings on the side opposite to the frame 5 side as a whole, the flow rate and/or flow velocity of the fluid flowing through the supply grooves and/or exhaust grooves decrease. Therefore, it is preferable to deepen the depth of the supply grooves and/or exhaust grooves compared to the depth of the branching grooves or to increase the cross-sectional area of the supply grooves and/or exhaust grooves compared to the cross-sectional area of the branching grooves.

From this viewpoint, as shown in the diagrams of FIGS. 3-6, it is preferable that the depth (length in the Z direction of the groove) of the first supply groove 2A is deeper than the depth of the first branching groove 3A and the depth of the first exhaust groove 4A is deeper than the depth of the first branching groove 3A. By deepening the depths of the first supply groove 2A and the first exhaust groove 4A, it becomes easier to flow fluid into a plurality of the first branching grooves 3A (a plurality of the first exhaust-side branching grooves 3Aa and the first supply-side branching grooves 3Ab). From the same viewpoint, it is preferable that the depth of the second supply groove 2B is deeper than the depth of the second branching groove 3B and the depth of the second exhaust groove 4B is deeper than the depth of the second branching groove 3B. From the same viewpoint, it is preferable that the depth of the third supply groove 2C is deeper than the depth of the third branching groove 3C and the depth of the third exhaust groove 4C is deeper than the depth of the third branching groove 3C. From the same viewpoint, it is preferable that the depth of the fourth supply groove 2D is deeper than the depth of the fourth branching groove 3D and the depth of the fourth exhaust groove 4D is deeper than the depth of the fourth branching groove 3D.

The depths of the supply groove, the branching groove, and the exhaust groove are each average values.

By changing the thickness of the frame 5 and the height of the flow-channel wall 1, it is possible to create a slope in the grooves without changing the overall height of the separator 100.

From this viewpoint, it is preferable that the difference between the depth of the first supply groove 2A and the depth of the first branching groove 3A ([depth of the first supply groove 2A] - [depth of the first branching groove 3A]) be 0.5 mm or more and 2.5 mm or less; more preferably 0.9 mm or more and 2.0 mm or less; and even more preferably 1.2 mm or more and 1.8 mm or less. It is preferable that the relationship between the depth of the second supply groove 2B and the depth of the second branching groove 3B also satisfy the above range. It is preferable that the relationship between the depth of the third supply groove 2C and the depth of the third branching groove 3C also satisfy the above range. It is preferable that the relationship between the depth of the fourth supply groove 2D and the depth of the fourth branching groove 3D also satisfy the above range.

From this viewpoint, it is preferable that the difference between the depth of the first exhaust groove 4A and the depth of the first branching groove 3A ([depth of the first exhaust groove 4A] - [depth of the first branching groove 3A]) be 0.5 mm or more and 2.5 mm or less; more preferably 0.9 mm or more and 2.0 mm or less; and even more preferably 1.2 mm or more and 1.8 mm or less. It is preferable that the relationship between the depth of the second exhaust groove 4B and the depth of the second branching groove 3B also satisfy the above range. It is preferable that the relationship between the depth of the third exhaust groove 4C and the depth of the third branching groove 3C also satisfy the above range. It is preferable that the relationship between the depth of the fourth exhaust groove 4D and the depth of the fourth branching groove 3D also satisfy the above range.

From this viewpoint, it is preferable that the difference between the depth of the shallowest part of the first supply groove 2A and the depth of the deepest part of the first branching groove 3A ([depth of the shallowest part of the first supply groove 2A] - [depth of the deepest part of the first branching groove 3A]) be 0.5 mm or more and 2.5 mm or less; more preferably 0.9 mm or more and 2.0 mm or less; and even more preferably 1.2 mm or more and 1.8 mm or less. It is preferable that the relationship between the depth of the shallowest part of the second supply groove 2B and the depth of the deepest part of the second branching groove 3B also satisfies the above range. It is preferable that the relationship between the depth of the shallowest part of the third supply groove 2C and the depth of the deepest part of the third branching groove 3C also satisfy the above range. It is preferable that the relationship between the depth of the shallowest part of the fourth supply groove 2D and the depth of the deepest part of the fourth branching groove 3D also satisfy the above range.

From this viewpoint, it is preferable that the difference between the depth of the shallowest part of the first exhaust groove 4A and the depth of the deepest part of the first branching groove 3A ([depth of the shallowest part of the first exhaust groove 4A] - [depth of the deepest part of the first branching groove 3A]) be 0.5 mm or more and 2.5 mm or less; more preferably 0.9 mm or more and 2.0 mm or less; and even more preferably 1.2 mm or more and 1.8 mm or less. It is preferable that the relationship between the depth of the shallowest part of the second exhaust groove 4B and the depth of the deepest part of the second branching groove 3B also satisfy the above range. It is preferable that the relationship between the depth of the shallowest part of the third exhaust groove 4C and the depth of the deepest part of the third branching groove 3C also satisfy the above range. It is preferable that the relationship between the depth of the shallowest part of the fourth exhaust groove 4D and the depth of the deepest part of the fourth branching groove 3D also satisfy the above range.

As shown in the diagrams of FIGS. 12, 13, 14, 15, 16, and 17 illustrating examples of variations of the separator 100, the depth of the supply groove may be inclined. When the depth of the supply groove is inclined, it is preferable that the supply groove on the side where the supply groove and the branching groove are connected is a shallower groove than the average depth of the supply groove. When the depth of the supply groove is inclined, it is preferable that the supply groove on the side opposite to the side where the supply groove and the branching groove are connected is a deeper groove than the average depth of the supply groove.

As shown in the diagrams of FIGS. 12, 13, 14, 15, 18, and 19 illustrating examples of variations of the separator 100, the depth of the exhaust groove may be inclined. When the depth of the exhaust groove is inclined, it is preferable that the exhaust groove on the side where the exhaust groove and the branching groove are connected is a shallower groove than the average depth of the exhaust groove. When the depth of the exhaust groove is inclined, it is preferable that the exhaust groove on the side opposite to the side where the exhaust groove and the branching groove are connected is a deeper groove than the average depth of the exhaust groove.

When the supply groove and/or the exhaust groove are inclined, the inclination angle may be the same angle for each groove or different angles. An example in which the inclination angles are different for each groove will be described using the diagram illustrating a variation example of the separator 100 in FIG. 16 and the diagram illustrating a variation example of the separator 100 in FIG. 20. When the E-E' cross-section of the separator 100 has the form of the diagram in FIG. 16 and the F-F' cross-section has the form of the diagram in FIG. 20, the inclination angle of the fourth supply groove 2D is a gentle slope, while the first supply groove 2A has a steep slope. It is also possible to select a configuration in which some supply grooves are inclined and some are not.

When the supply groove and/or the exhaust groove are inclined, the groove may be uniformly inclined with a constant angle or the inclination angle may change midway. For example, as shown in the diagram illustrating a modification example of the separator 100 in FIG. 21, the region where the supply groove (the fourth supply groove 2D) connects to the branching groove (the fourth branching groove 3D) may not be inclined, while the inclination of the inclined grooves in other parts may be provided.

From the above viewpoint, it is preferable that the cross-sectional area of the first supply groove 2A is larger than the cross-sectional area of the first branching groove 3A, and the cross-sectional area of the first exhaust groove 4A is larger than the cross-sectional area of the first branching groove 3A. By increasing the cross-sectional areas of the first supply groove 2A and the first exhaust groove 4A, it is possible to facilitate the flow of fluid into multiple first branching grooves 3A (multiple first exhaust-side branching grooves 3Aa and first supply-side branching grooves 3Ab). From the same viewpoint, it is preferable that the cross-sectional area of the second supply groove 2B is larger than the cross-sectional area of the second branching groove 3B, and the cross-sectional area of the second exhaust groove 4B is larger than the cross-sectional area of the second branching groove 3B. From the same viewpoint, it is preferable that the cross-sectional area of the third supply groove 2C is larger than the cross-sectional area of the third branching groove 3C, and the cross-sectional area of the third exhaust groove 4C is larger than the cross-sectional area of the third branching groove 3C. From the same viewpoint, it is preferable that the cross-sectional area of the fourth supply groove 2D is larger than the cross-sectional area of the fourth branching groove 3D, and the cross-sectional area of the fourth exhaust groove 4D is larger than the cross-sectional area of the fourth branching groove 3D.

From the above viewpoint, it is preferable that the cross-sectional area of the first supply groove 2A be 150% or more and 350% or less of the cross-sectional area of the first branching groove 3A; more preferably 190% or more and 300% or less; and even more preferably 220% or more and 280% or less. It is preferable that the relationship between the cross-sectional area of the second supply groove 2B and the cross-sectional area of the second branching groove 3B also satisfy the above range. It is preferable that the relationship between the cross-sectional area of the third supply groove 2C and the cross-sectional area of the third branching groove 3C also satisfy the above range. It is preferable that the relationship between the cross-sectional area of the fourth supply groove 2D and the cross-sectional area of the fourth branching groove 3D also satisfy the above range.

From the above viewpoint, it is preferable that the cross-sectional area of the first exhaust groove 4A be 150% or more and 350% or less of the cross-sectional area of the first branching groove 3A; more preferably 190% or more and 300% or less; and even more preferably 220% or more and 280% or less. It is preferable that the relationship between the cross-sectional area of the second exhaust groove 4B and the cross-sectional area of the second branching groove 3B also satisfy the above range. It is preferable that the relationship between the cross-sectional area of the third exhaust groove 4C and the cross-sectional area of the third branching groove 3C also satisfy the above range. It is preferable that the relationship between the cross-sectional area of the fourth exhaust groove 4D and the cross-sectional area of the fourth branching groove 3D also satisfy the above range.

By increasing the depth of the supply groove and/or the exhaust groove, the cross-sectional area of the supply groove and/or the exhaust groove can be made larger than the cross-sectional area of the branching groove. Also, by changing the width (length in the second direction) of the supply groove and/or the exhaust groove, the cross-sectional area of the supply groove and/or the exhaust groove can be made larger than the cross-sectional area of the branching groove.

An example in which the cross-sectional area of the supply groove and/or the exhaust groove is larger than the cross-sectional area of the branching groove will be described using the diagram illustrating a variation example of the separator 100 in FIG. 22. In the diagram illustrating a variation example of the separator 100 in FIG. 22, the cross-sectional areas increase in the order of the first supply groove 2A, the second supply groove 2B, the third supply groove 2C, and the fourth supply groove 2D, and are examples where they are larger than the cross-sectional area of the first branching groove 3A. The cross-sectional areas of the supply grooves with relatively longer lengths are made larger than those of the supply grooves with relatively shorter lengths.

Furthermore, it is possible to narrow, widen, or block some of the grooves in addition to changing the depth and cross-sectional area. In the diagram illustrating a variation example of the separator 100 in FIG. 22, there is a protrusion on the frame 5 constituting the bottom surface of the first exhaust-side opening groove 3Aa, narrowing a part of the branching grooves. In the diagram illustrating a variation example of the separator 100 in FIG. 23, parts of the fourth exhaust-side opening groove 3Da and the fourth supply-side opening groove 3Db are narrowed due to protrusions on the flow-channel wall 1.

By adopting the configuration of this embodiment, fluid can flow more evenly. By adopting the configuration of this embodiment, it is possible to make fluid flow more evenly without significantly changing the pressure loss, even without changing the groove pattern of the separator 100 already designed. When the fluid flows with high uniformity, gas accumulation is less likely to occur.

### (SECOND EMBODIMENT)

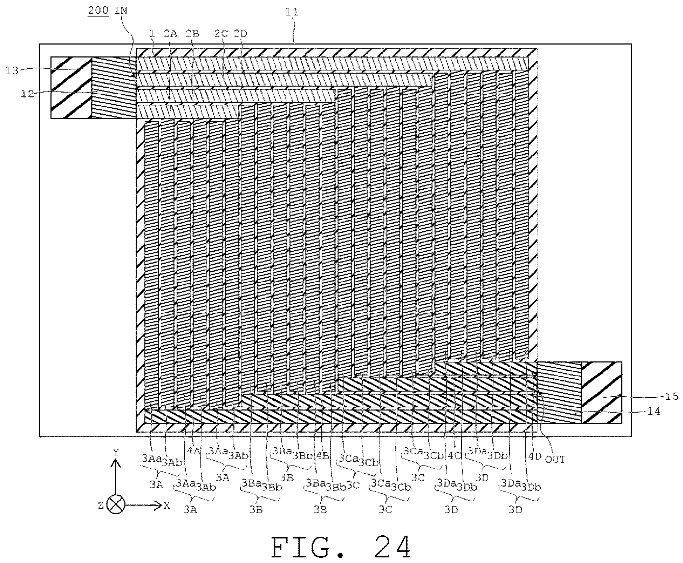

A second embodiment relates to a separator unit. The separator unit includes the separators 100 and 101 according to the first embodiment. FIG. 24 shows a schematic diagram of a separator unit 200. The separator unit 200 comprises a supporting member, the separator 100, a supply-side connection channel 12, a supply manifold 13, an exhaust-side connection channel 14, and an exhaust manifold 15.

The supporting member 11 is preferably insulating and is , for example, made of a resin material. The separator 100 is provided on the supporting member 11.

The supply-side connection channel 12 is provided between the supply manifold 13 and the supply port IN. The supply-side connection channel 12 is a flow channel that connects the flow path on the supply groove side of the separator 100 to the supply manifold 13. The supply-side connection channel 12 may have grooves. It is preferable that the grooves of the supply-side connection channel 12 are connected to the flow-channel wall 1 of the supply groove of the separator 100. The supply-side connection channel 12 may be protrusions and depressions on the supporting member 11, or may be configured as a separate member from the supporting member 11.

The supply manifold 13 is an opening of the separator unit 200. Fluid is supplied from the supply manifold 13. Other manifolds not shown in the figure may be provided in the separator unit 200.

The exhaust-side connection channel 14 is provided between the exhaust manifold 15 and the exhaust port OUT. The exhaust-side connection channel 14 is a passage that connects the flow path on the supply groove side of the separator 100 to the exhaust manifold 15. The exhaust-side connection channel 14 may have grooves. It is preferable that the grooves of the exhaust-side connection channel 14 are connected to the flow-channel wall 1 of the supply groove of the separator 100. The exhaust-side connection channel 14 may be formed by the protrusions and depressions of the supporting member 11, or may be configured as a separate member distinct from the supporting member 11.

The exhaust manifold 15 is an opening of the separator unit 200. Fluid is discharged from the exhaust manifold 15. Other manifolds not shown in the figure may be provided in the separator unit 200.

By adopting the configuration of this embodiment, fluid can flow more evenly. When fluid flows with high uniformity, gas accumulation is less likely to occur.

### (THIRD EMBODIMENT)

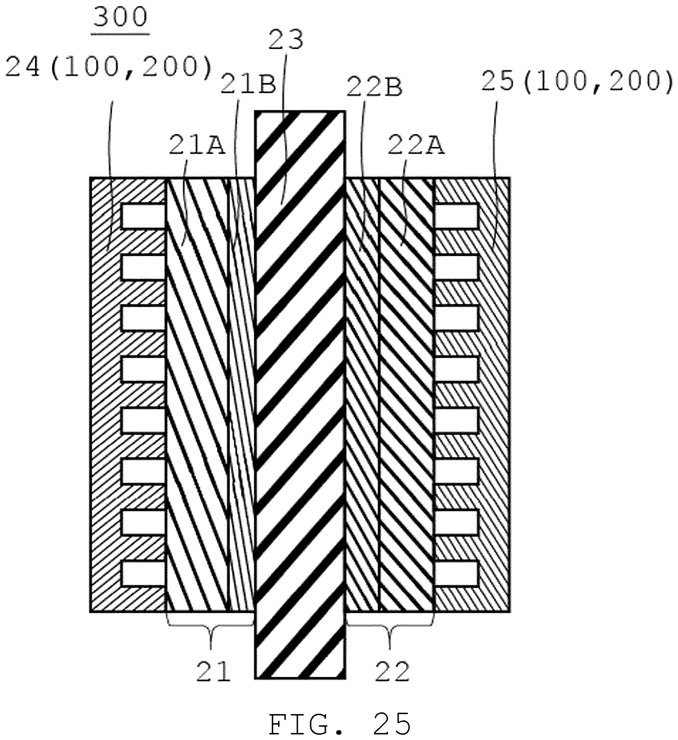

A third embodiment relates to an electrochemical cell. FIG. 25 shows a diagram of an electrochemical cell 300 according to the third embodiment. The electrochemical cell 300 is used for, for example, water electrolysis, CO₂ electrolysis, ammonia electrosynthesis, or fuel cells. When CO₂ is used in the electrolytic reaction, it may be recovered from combustion gases and the like using an amine solution. The electric power generated by the electrochemical cell can be used to perform electrolysis using a similar electrochemical cell, charge a secondary battery, or be consumed by a load. A fuel cell or solar cell may be used as a power source for the electrochemical cell. The electrochemical cell can be used to convert surplus electrical energy into chemical energy and store it, for example.

The electrochemical cell 300 comprises an anode 21, a cathode 22, a diaphragm 23, a first separator 24, and a second separator 25.

The first electrode (anode) 21 has a support 21A, such as a porous gas diffusion layer, on the first separator 24 side and a catalyst layer 21B on the diaphragm 23 side. Suitable materials are used for the support 21A and the catalyst layer 21B of the first electrode 21 depending on the anode reaction.

The second electrode (cathode) 22 has a support 22A, such as a porous gas diffusion layer, on the second separator 25 side and a catalyst layer 22B on the diaphragm 23 side. Suitable materials are used for the support 22A and the catalyst layer 22B of the second electrode 22 depending on the cathode reaction.

The diaphragm 23 is provided between the cathode 22 and the anode 21, and is laminated with the cathode 22 and the anode 21 to form a membrane electrode assembly (MEA). The diaphragm 23 can move ions between the anode 21 and the cathode 22, and can separate the anode side of the anode 21 and the first separator 24 from the cathode side of the cathode 22 and the second separator 25. The diaphragm 23 is composed of an ion exchange membrane, such as an anion exchange membrane or a cation exchange membrane, or a porous membrane made of an organic polymer material.

Examples of ion exchange membranes used for the diaphragm 23 include cation exchange membranes such as Nafion (registered trademark) and Flemion (registered trademark), and anion exchange membranes such as NEOSEPTA (registered trademark), Selemion (registered trademark), Sustainion (registered trademark), and PiperION (registered trademark). The organic polymer material that constitutes the porous membrane is not particularly limited, but examples include fluorine resins such as Teflon (registered trademark) and polyvinylidene fluoride, hydrocarbon polymers such as polyether, polysulfone, polyethylene, polypropylene, and polyethersulfone, and cellulose.

The first separator 24 receives the fluid used for the reaction of the first electrode 21, and discharges the fluid containing the reactants. The first separator 24 is electrically connected to the first electrode 21.

The second separator 25 receives the fluid used for the reaction of the second electrode 22 and discharges the fluid containing the reactants. The second separator 25 is electrically connected to the second electrode 22.

The separator 100 according to the first embodiment or the separator unit 200 according to the second embodiment is preferably used for the first separator 24 and/or the second separator 25.

By using the separator 100 according to the first embodiment or the separator unit 200 according to the second embodiment, gas accumulation within the separator 100 can be reduced, and deterioration of the diaphragm 23 can be reduced.

### (FOURTH EMBODIMENT)

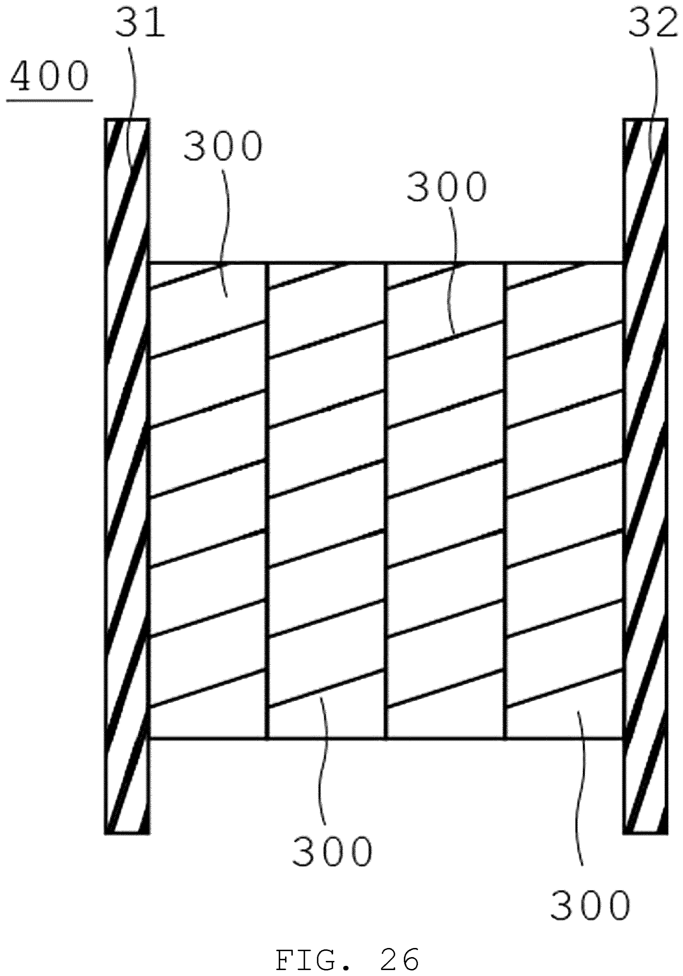

A fourth embodiment relates to a stack. FIG. 26 shows a schematic cross-sectional diagram of a stack 400 according to the fourth embodiment. The stack 400 shown in FIG. 26 comprises multiple electrochemical cells 300 connected in series. Tightening plates 31 and 32 are attached to both ends of the stack 400. The fourth embodiment may also utilize a variant electrochemical cell.

When electrolysis is performed, the amount of hydrogen (H₂) or carbon compounds such as CO generated by a single electrochemical cell 300 is small, and when power generation is performed, the amount of electricity generated by a single electrochemical cell 300 is also small. Therefore, by configuring a stack 400 with multiple electrochemical cells 300 connected in series, the amount of product or power generation can be increased.

### (FIFTH EMBODIMENT)

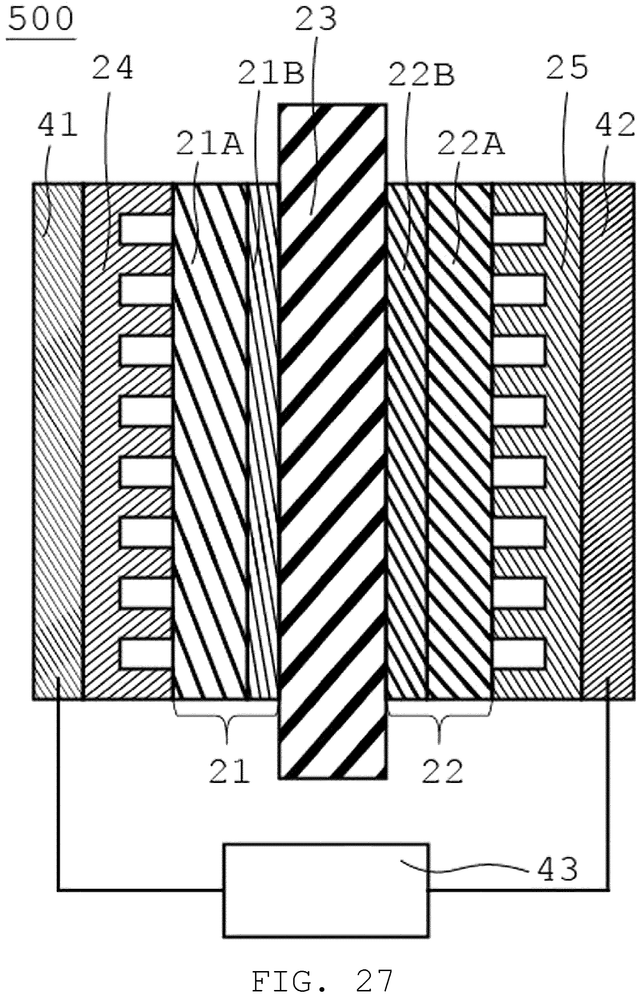

A fifth embodiment relates to an electrolysis apparatus and a fuel cell. The electrochemical cell 300 or the stack 400 using the electrochemical cell 300 is used in the electrolysis apparatus and the fuel cell. FIG. 27 shows a diagram of an apparatus 500 according to the fourth embodiment. The apparatus 500 uses the electrochemical cell 300, and the figure illustrates part of the configuration of an actual apparatus. When CO₂ is subjected to electrolysis in the electrochemical cell 300, the CO₂ to be electrolyzed in the electrochemical cell 300 may be CO₂ gas recovered from combustion gases or the like using an amine solution.

The apparatus 500 comprises the electrochemical cell 300, an anode current collector 41, a cathode current collector 42, and a power supply or load 43.

The anode current collector 41 is provided on the first separator 24 of the electrochemical cell 300. The first separator 24 is electrically connected to the anode current collector 41.

The cathode current collector 42 is provided on the second separator 25 of the electrochemical cell 300. The second separator 25 is electrically connected to the cathode current collector 42.

The separator 100 according to the first embodiment or the separator unit 200 according to the second embodiment is preferably used for the first separator 24 and/or the second separator 25.

The power supply or the load 43 is connected between the anode current collector 41 and the cathode current collector 42.

When the apparatus 500 is an electrolysis apparatus, the power supply 43 is connected between the anode current collector 41 and the cathode current collector 42.

When the apparatus 500 is a fuel cell, the load 43 is connected between the anode current collector 41 and the cathode current collector 42. The load 43 may be a power converter, a secondary battery, or the like.

Hereinafter, the present invention will be described in more detail based on examples, but the present invention is not limited to the following examples.

### (Example 1)

An electrochemical cell corresponding to FIG. 25 was fabricated by using the separator 100 of FIG. 1 for the first separator 24 and the second separator 25.

### (Example 2)

An electrochemical cell corresponding to FIG. 25 was fabricated by using the separator 100 of FIG. 1 for the first separator 24.

### (Comparative Example 1)

An electrochemical cell corresponding to FIG. 25 was fabricated by using a separator in which the depths and cross-sectional areas of the supply groove, the branching groove, and the exhaust groove are the same for both the first separator 24 and the second separator 25.

Electrolysis operation was performed under the same conditions to electrolyze CO₂ and generate CO using the electrochemical cells in Examples 1-2 and Comparative Example 1. In all of Examples 1-7, gas accumulation in the separator could be suppressed more than in Comparative Example 1, and cell voltage rise could be reduced even during long-term operation.

Fuel cell operation was performed under the same conditions using methanol as fuel with the electrochemical cells of Examples 1-2 and Comparative Example 1. In all of Examples 1-7, gas accumulation in the separator could be suppressed more than in Comparative Example 1, and cell voltage drop could be reduced even during long-term operation.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A separator (100) comprises:
a first supply groove (2A);
a first branching groove (3A) that includes multiple grooves; and
a first exhaust groove (4A), wherein
the first supply groove (2A) and the first exhaust groove (4A) extend in a first direction,
the first branching groove (3A) is positioned between the first supply groove (2A) and the first exhaust groove (4A) in a second direction,
the depth of the first supply groove (2A) is deeper than the depth of the first branching groove (3A), and
the depth of the first exhaust groove (4A) is deeper than the depth of the first branching groove (3A).

2. The separator (100) according to claim 1, wherein
the difference between the depth of the first supply groove (2A)and the depth of the first branching groove (3A) is 0.5 mm or more and 2.5 mm or less.

3. The separator (100) according to claim 1 or 2, wherein
the difference between the depth of the first supply groove (2A)and the depth of the first branching groove (3A) is 0.9 mm or more and 2.0 mm or less.

4. The separator (100) according to any one of claims 1 to 3, wherein
the first branching groove (3A) comprises multiple pairs of a first exhaust-side opening groove (3Aa) that is closed on the side of the first supply groove (2A)and open on the side of the first exhaust groove (4A) and a first supply-side opening groove (3Ab) that is open on the side of the first supply groove (2A) and closed on the side of the first exhaust groove (4A), and
the first exhaust-side opening grooves (3Aa) and the first supply-side opening grooves (3Ab) are arranged alternately.

5. The separator (100) according to any one of claims 1 to 4, wherein
the length of the first exhaust groove (4A) is twice or more the length of the first supply groove (2A).

6. The separator (100) according to any one of claims 1 to 5, wherein
the first supply groove (2A), the first branching groove (3A), and the first exhaust groove (4A) are spaces surrounded by a frame (5) and a flow-channel wall (1) provided on the frame (5).

7. The separator (100) according to claim 6, wherein
the side opposite the frame (5) side of the first supply groove (2A), the first branching groove (3A), and the first exhaust groove (4A) have openings on the side opposite to the frame (5) side as a whole.

8. The separator (100) according to any one of claims 1 to 7, further comprising;
a second supply groove (2B) that is longer than the first supply groove (2A),
a second branching groove (3B) that includes multiple grooves and is arranged in the longitudinal direction of the first branching groove (3A) and the first supply groove (2A); and
a second exhaust groove (4B), wherein
the second supply groove (2B) and the second exhaust groove (4B) extend in the first direction,
the second branching groove (3B) is positioned between the second supply groove (2B) and the second exhaust groove (4B) in the second direction,
the depth of the second supply groove (2B) is deeper than the depth of the second branching groove (3B), and
the depth of the second exhaust groove (4B) is deeper than the depth of the second branching groove (3B).

9. The separator (100) according to claim 8, wherein
the length of the first exhaust groove (4A) is longer than the lengths of the second supply groove (2B) and the second exhaust groove (4B).

10. The separator (100) according to claim 8 or 9, wherein
the length of the first exhaust groove (4A) is twice or more the length of the second supply groove (2B).

11. A separator (100) comprising:
a first supply groove (2A);
a first branching groove (3A) that includes multiple grooves; and
a first exhaust groove (4A), wherein
the first supply groove (2A) and the first exhaust groove (4A) extend in a first direction,
the first branching groove (3A) is positioned between the first supply groove (2A) and the first exhaust groove (4A) in a second direction,
the cross-sectional area of the first supply groove (2A) is larger than the cross-sectional area of the first branching groove (3A), and
the cross-sectional area of the first exhaust groove (4A) is larger than the cross-sectional area of the first branching groove (3A).

12. The separator (100) according to claim 11, wherein
the cross-sectional area of the first supply groove (2A) is 150 % or more and 350 % or less of the cross-sectional area of the first branching groove (3A).

13. The separator (100) according to claim 11 or 12, wherein
the first branching groove (3A) includes multiple groups of a first exhaust-side opening groove (3Aa) that is closed on the side of the first supply groove (2A) and open on the side of the first exhaust groove (4A), and
a first supply-side opening groove (3Ab) that is open on the side of the first supply groove (2A) and closed on the side of the first exhaust groove (4A), and
the first exhaust-side opening grooves (3Aa) and the first supply-side opening grooves (3Ab) are arranged alternately.

14. The separator (100) according to any one of claims 11 to 13, further comprising:
a second supply groove (2B) that is longer than the first supply groove (2A);
a second branching groove (3B) that includes multiple grooves and is arranged in the longitudinal direction of the first branching groove (3A) and the first supply groove (2A); and
a second exhaust groove (4B), wherein
the second supply groove (2B) and the second exhaust groove (4B) extend in the first direction,
the second branching groove (3B) is positioned between the second supply groove (2B) and the second exhaust groove (4B) in the second direction,
the cross-sectional area of the second supply groove (2B) is larger than the cross-sectional area of the second branching groove (3B), and
the cross-sectional area of the second exhaust groove (4B) is larger than the cross-sectional area of the second branching groove (3B).

15. The separator (100) according to any one of claims 11 to 13, wherein
the first supply groove (2A), the first branching groove (3A), and the first exhaust groove (4A) are spaces surrounded by a frame (5) and a flow-channel wall (1) provided on the frame (5), and
the side opposite the frame (5) side of the first supply groove (2A), the first branching groove (3A), and the first exhaust groove (4A) have openings on the side opposite to the frame (5) side as a whole.

16. An apparatus (500) comprising an electrochemical cell (300) which comprises a first electrode (21) including a support (21A), a second electrode (22) including a support (22A), a diaphragm (23) between the first electrode (21) and the second electrode (22), a first separator (24) connected to the first electrode (21), and a second separator (25) connected to the second electrode (22), wherein
the first separator (24) and/or the second separator (25) is the separator (100) according to any one of claims 1 to 14, and
the apparatus (500) is an electrolyzing apparatus or a fuel cell.
